# EUROPEAN PATENT SPECIFICATION

(11) **EP 2 500 297 B1**
(45) Date of publication and mention of the grant of the patent: **07.10.2015**
(21) Application number: 12160139.7
(22) Date of filing: 19.03.2012
(51) Int. Cl.: B65G 47/52, B26D 7/06, B65G 47/14, B65G 47/31, B26D 3/16, B26D 11/00

(54) **Feeding device for agricultural products**
Zuführvorrichtung für Agrarerzeugnisse
Dispositif d'alimentation pour produits agricoles

(30) Priority: 18.03.2011 EP 11158888
(43) Date of publication of application: 19.09.2012
(73) Proprietor: Bastoon Beheer B.V., 7007 CA Doetinchem (NL)
(72) Inventor: van Felius, Jan, 4152 EM Rhenoy (NL)
(74) Representative: De Vries & Metman

(56) References cited:
- EP-A1- 1 964 796
- EP-A1- 2 039 258
- DE-A1-102004 036 775
- DE-U1-202005 017 295
- NL-A- 7 811 537
- US-A- 5 740 899
- US-A1- 2010 071 569

## Description

The invention concerns a feeding device in accordance with the preamble of claim 1 as known from the document EP-A-2 039 258. Such feeding devices are known and in the known feeding devices the products are aligned on the rotating ring immediately next to each other. With fast moving slots it is difficult to transport only one product in a slot at a time and there remains the risk that products remain hanging between slots or that slots receive two products, which is undesirable.

In order to overcome this disadvantage the feeding device is according to claim 1. In this way adjacent feeder belts give the product an increased speed so that the distance between the individual products increases and they can be thrown in adjacent slots.

In accordance with an embodiment the feeding device is according to claim 2. In this way, the product is firmly gripped between the belts so that its speed is increased easily and they can be thrown in adjacent slots.

In accordance with an embodiment the feeding device is according to claim 3. In this way, a large quantity of the products can be unloaded on the rotating cone and they will move onto the ring one by one.

In accordance with an embodiment the feeding device is according to claim 4. In this way, the positioning drive can position the duct so that the product that moves through the duct towards the transport plane and is directed to land in the slot. This prevents undesired situations of the product hanging halfway over the edge of a slot. This undesired situations could lead for some products to malfunction and would reduce the capacity of the cutting device.

In accordance with an embodiment the feeding device is according to claim 5. In this way, the separation shields further guide the product into a slot and prevent the product being half outside a slot and not aligned with the side walls of the slot.

In accordance with an embodiment the feeding device is according to claim 6. In this way, the push bar can maintain its movement in the transport direction and pass under the rotating knife. The cams move the product upwards so that the rotating knife cuts through the whole section of the products. The supports on the push bar pass on both sides of the rotating knife and maintain contact with the upwardly moved product so that the moving push bar maintains it contact with the product and the cut products are moved along the rotating knife.

In accordance with an embodiment the feeding device is according to claim 7. In this way, the cylindrical outer circumference supports the products in a stable way while the cam discs rotate during cutting around a stationary rotation axis and the push bars do not interfere with the cam discs as they pass under the rotating knife while in the cavities.

In accordance with an embodiment the cutting device is according to claim 8. In this way, it is possible that thin push bars move relatively heavy products at high speed over the table whereby in a preferred embodiment the guide notches position the supports accurately relative to the rotating knives.

In accordance with an embodiment the cutting device is according to claim 9. In this way, it is possible to have one rotatable part over the whole width of the table that is easy to clean.

In accordance with an embodiment the cutting device is according to claim 10. In this way, the transport belt pushes the product against the first rim and the rotating knife cuts a specific length of one of the ends of the product. This is advantageous as for many agricultural products the ends have a reduced taste or have a less perfect appearance.

In accordance with an embodiment the cutting device is according to claim 11. In this way, both ends of the product are cut off.

In accordance with an embodiment the cutting device is according to claim 12. In this way, the same length is cut from both ends of the product so that for products that have different ends, such as agricultural products that may have a top and a bottom, it is not important which end is at the side of the first rim or of the second rim.

In accordance with an embodiment the cutting device is according to claim 13. In this way, the long product is cut in shorter parts that are suitable for further use.

Hereafter the invention is illustrated in an embodiment of an installation for cutting carrots with the aid of a drawing. In the drawing
Figure 1 shows a top view of the installation for cutting carrots comprising a separation device, a feeding device, and a cutting device,
Figure 2 shows a perspective view of a detail of the feeding device feeding carrots onto the cutting device of figure 1,
Figure 3 shows a perspective view of the cutting device of figure 1,
Figure 4 shows a detail of the perspective view of figure 3,
Figure 5 shows the perspective view of the first cutting knife of the cutting device of figure 1, and
Figure 6 shows section VI-VI of figure 1.

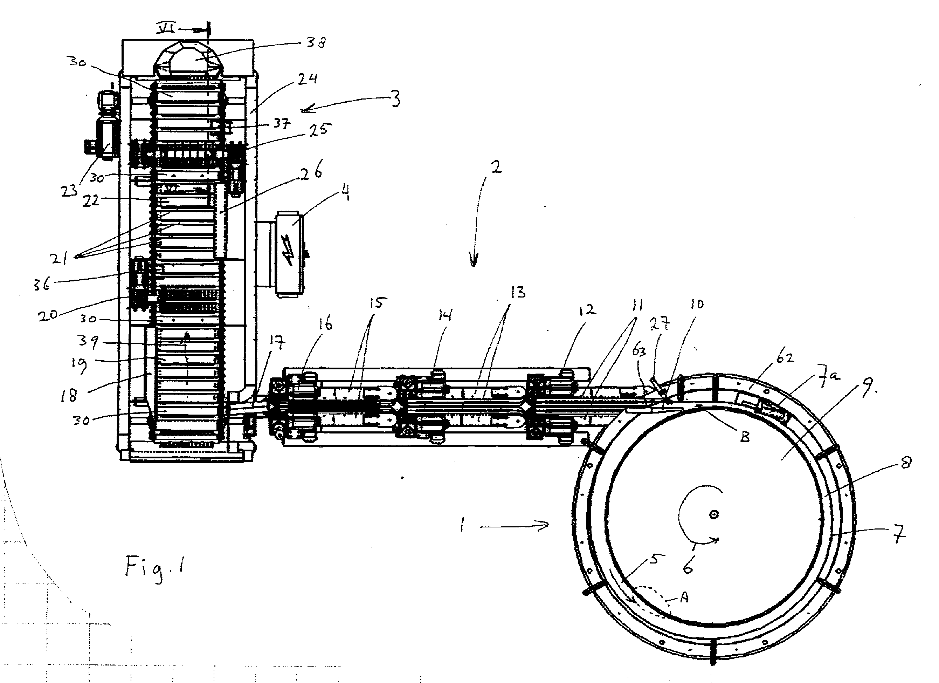

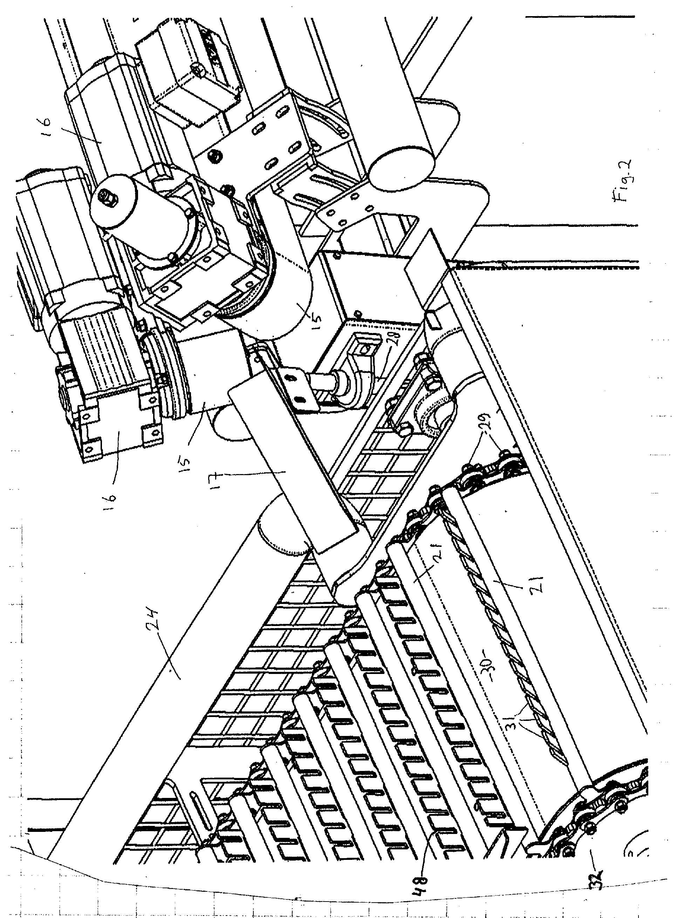

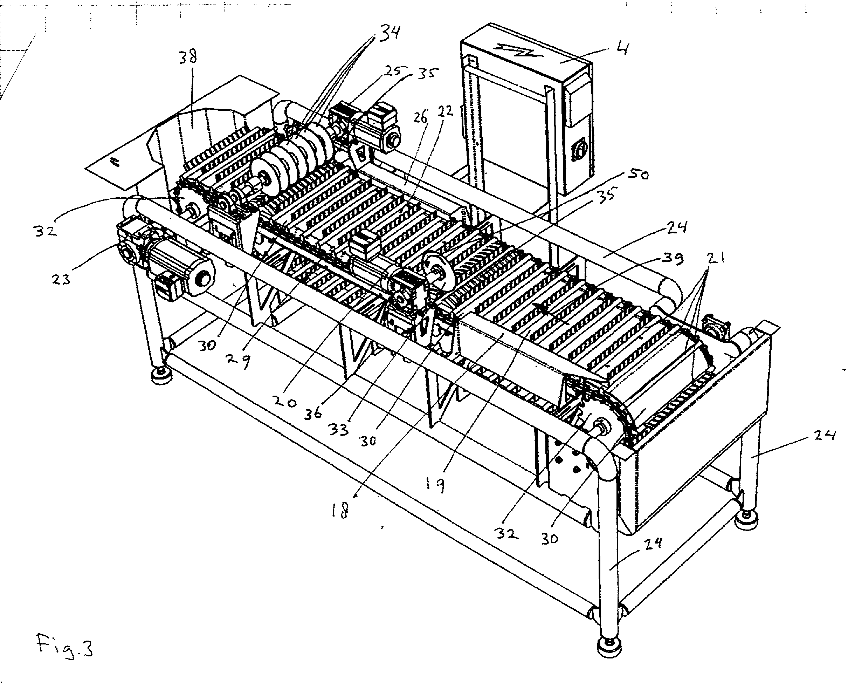

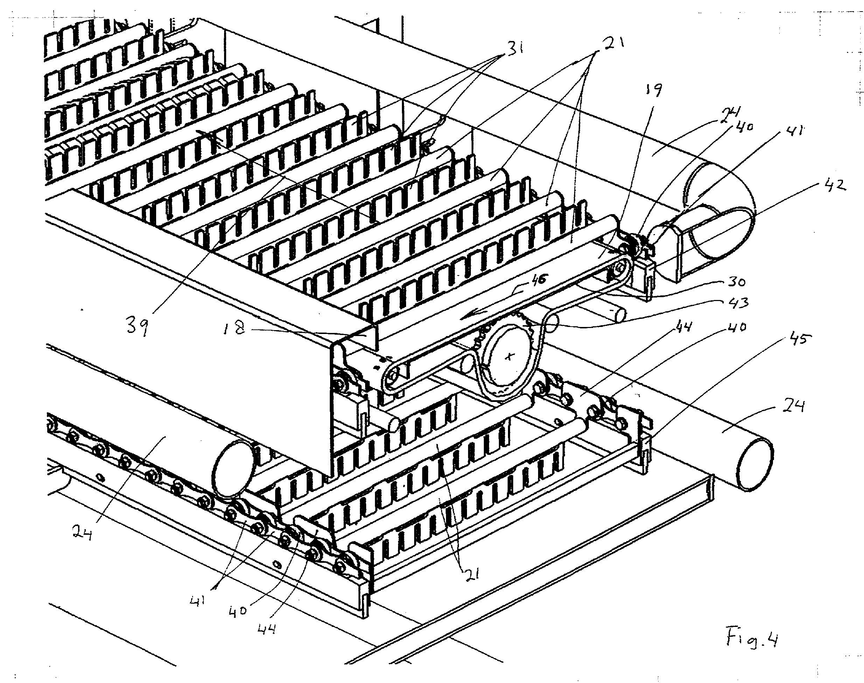

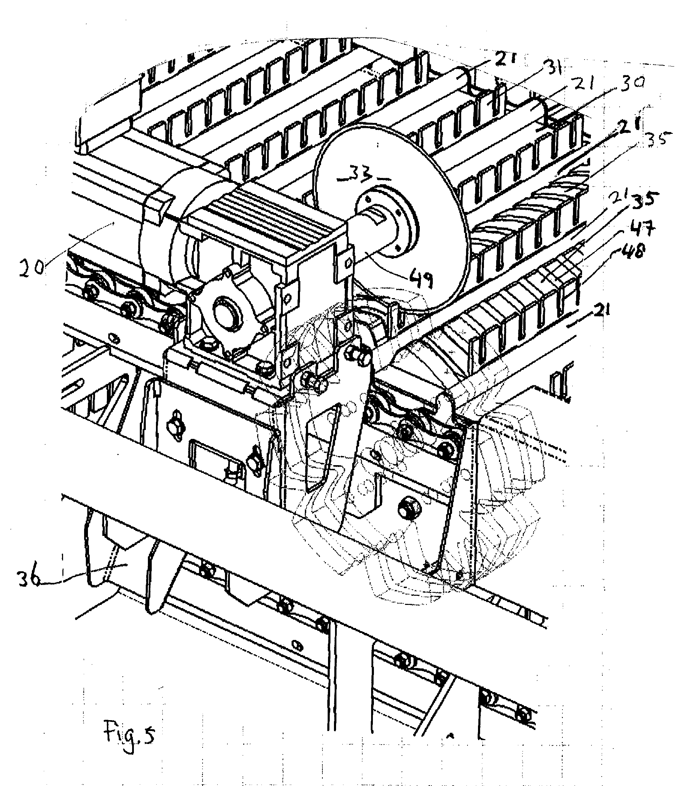

The installation for cutting carrots as shown in figures 1-6 comprises a product separator 1, feeder belts 2, the cutting assembly 3, and a control assembly 4. The installation is designed for automatically cutting four carrots per second, whereby in the cutting device first one end of the carrot is cut off and discharged, next the second end of the carrot is cut off and discharged. The remaining part of the carrot is cut in small parts that are suitable to be cut into julienne. As an example the typical dimensions of the carrots cut in this installation are 25 to 75 mm diameter and 200 to 400 mm length. As with all agricultural products, these dimensions may vary greatly. For instance it is also possible to adapt the installation to cutting the carrots in small disks.

The products such as carrots that are to be cut are unloaded on a cone 9 that has an obtuse top angle and that can rotate in a direction 6. The unloading on top of the cone 9 can be done manually or a transport band (not shown) transports the products to the centre of the cone 9. Around and adjacent to the cone 9 is a ring 8 that can rotate with a ring rotation speed in the direction 5. Around the ring 8 is a stationary ring 62. In the loading area A the top side of the ring 8 and the cone 9 are approximately at the same level, so that the products lying on the cone 9 move onto the ring 8.

Immediately above the ring 8 is a circular wall 7 along which the products supported by ring 8 can slide and which wall 7 narrows the available width of the ring 8. When products are side-by-side on the rotating ring 8 the narrowing width pushes one of the products back onto the cone 9. If a product is (partly) on top of another product a height limit 7a pushes against the product on top and one of the products falls back onto the cone 9. This means that products on the rotating ring 8 that arrive in a feeder area B are aligned one behind the other and a separation guide 10 guides the products one after the other in a slot 63 in the stationary ring 62 and so between first acceleration belts 11.

The first acceleration belts 11 are tangential to the ring 8 and the two belts 11 together form a groove with inclined sides that clamp against the products P. When moving with a first speed that is higher than the ring speed, the belt surfaces can pull the products P from the ring 8 and so increase the distance between the clamped product P and the product P left on the ring 8.

The first acceleration belts 11 increase the speed of the separated product P to the first speed. A first belt drive 12 drives each first acceleration belt 11. Second acceleration belts 13 have a second speed and increase the speed of the product P to the second speed that is higher than the first speed; a second belt drive 14 drives each second acceleration belt 13. Third acceleration belts 15 increase the speeds of the product P further to a third speed that is so high that the belts 15 throw the product while guided by a duct 17 on the table 30 between push bars 21 of the cutting assembly 3. The increasing speed of the product P by the successive belts 11, 13, and 15 increases the distance between the successive products, so that a positioning drive 28 has time to direct the duct 17 in such a way that the product P is thrown between push bars 21 and not partly on one of the push bars 21.

A chain drive 23 rotates chain wheels 32 that are mounted in a frame 24 and the chain wheels 32 rotate in a rotation direction 60. A chain 29 is looped around the chain wheels 32 and the ends of the push bars 21 are coupled to the chain 29. In the chain drive 23 a sensor (not shown) detects the position of the push bars 21 relative to the duct 17. A product sensor 27 detects the moment that a product P enters between the first acceleration belts 11. An algorithm in the control system of the control assembly 4 determines when this detected product P passes through the duct 17. Based on the detected position of the push bars 21 and the calculated position of the push bars 21 when the product P leaves the duct 17, the algorithm can determine the direction wherein the positioning drive 28 must direct the duct 17 so that the product P lands between two push bars 21.

Products P, that are stiff and do not or hardly bend, fall either to one side or the other side of the push bar 21 and will always end up between two push bars 21 especially at high speeds of the push bars 21. The push bars 21 have a pitch distance of 100 to 150 mm and when four carrots can be cut per second, this means that the push bars 21 have a speed of approximately 0.5 m per second and the product falling between the push bars 21 must be accelerated to that considerable speed. This means there is no fear that the described type of products P will stay resting on top of the push bar 21 and that the products P will always fall between the push bars 21. In that situation the duct 17 can be stationary or there is no duct and there is no positioning drive 28 and no associated control algorithm.

In a further embodiment (not shown) wherein the third acceleration belts 15 throw the product P between the push bars 21, there are guide plates mounted on the push bars 21. Two endless chains support the guide plates and position the guide plates on the push bars 21 before the push bars approach the position where the third acceleration belts 15 throw the products P. The endless chains move with the push bars 21 and lift the guide plates from the push bars 21 after the push bars 21 have moved past the position where the third acceleration belts 15 throw the products P. The guide plates extend above the third acceleration belts 15 to guide the thrown products P and/or the top ridge of the guide plates are inclined so that when the endless chain lifts a guide plate the product P that accidently lies on top of the guide plate slides from the guide plate to between the push bars 21.

The chain 29 has outer linkplates 44 and inner link plates 41 with a notch and the push bars 21 are fastened on the outer linkplates 44. Between the inner linkplates 41 the chain 29 has chain rollers 40 that roll around link pins that connect the inner link plates 41 and the outer link plates 44. The chain rollers 40 roll over an upper chain guide 42 or a lower chain guide 45. The upper chain guides 42 guide the notches of the outer link plates 44 so that the push bars 21 are aligned in a transport direction 39 while they move over a table 30. The push bars 21 have supports 31 that extend upwards above the table 30 and that push the product P over the table in the transport direction 39. Between the supports 31 are openings 48 through which a rotating knife 33, 34 can pass so that the push bars 21 can pass under the rotating knive 33,34. The maximum height of the push bar 21 at the location of the opening 48 is a first distance a. Due to the notches of the outer link plates 44 the alignment of the push bars 21 is such that the openings 48 need to be only slightly wider than the thickness of the rotating knife 33, 34 so that the supports 31 support the product P to near the rotating knife 33, 34, which improves the quality of the cut.

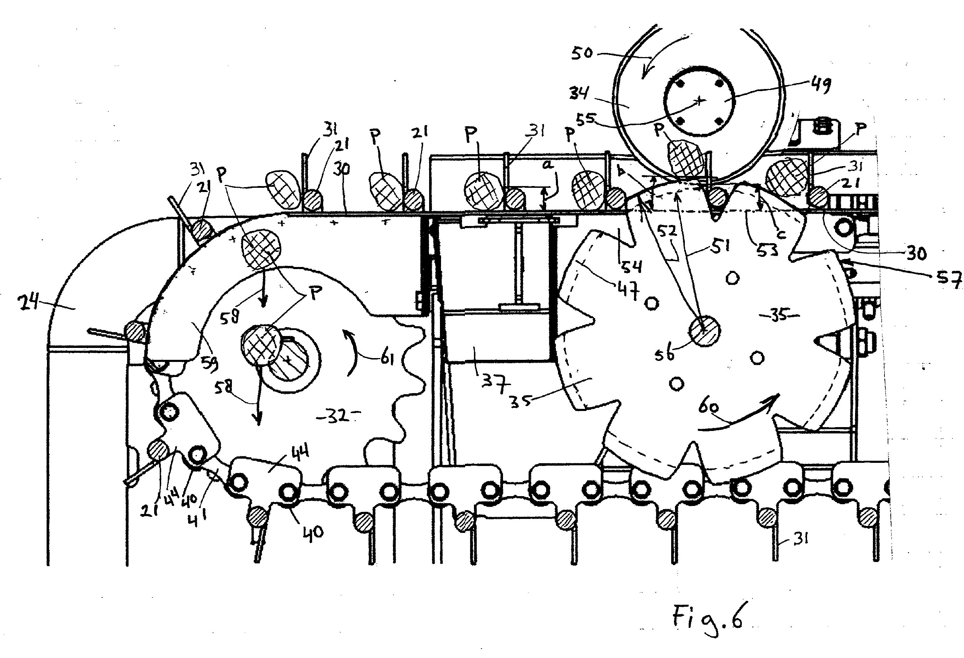

The push bars 21 between which a product P is thrown slide the product P over the table 30 till it is supported by a first positioning belt 19. The first positioning belt 19 can slide over the table 30. A belt drive 43 moves the first positioning belt 19 in transverse direction 46 so that the products P on the first positioning belt while moving in the transport direction 39, are pushed against a stop shield 18. The push bars 21 continue to push the products P towards the first rotating knife 33 that is located at a fixed distance from the stop shield 18, and the first rotating knife 33 cuts a fixed length from the end of the product P that was pushed against the stop shield 18. A first knife drive 20 rotates a shaft 49 that is coupled to the first knife 33 so that it rotates around a knife rotation axis 55 in a rotation direction 50 that pushes the approaching product P downwards and against the support 31. The cutting edge of the first rotating knife 33 is a third distance c above a push bar path 53 (see figure 6 that shows the cutting action at the location of a second rotating knife 34).

The third distance c is longer than the first distance a, so that all push bars 21 can pass under the rotating knife 33, 34 and follow the straight push bar path 53 as the chains 29 that guide the push bars 21 follow a straight path over the upper chain guide 42. At the location under the knife rotation axis 55 a cam disc 35 is located at both sides of the rotating knife 33 to support the product P during cutting by the rotating knife 33 and to push the product P upwards above the table 30 towards the rotating knife 33, 34. The cam disc 35 has a cam disc axis 56, a cylindrical surface 57 with an outer cam radius 52 that under the rotating knife 33, 34 pushes the product P upwards between the push bars 21, supports the product at both sides of the rotating knife 33, extends a second distance b above the push bar path 53 and has a cam groove 47 with an inner groove radius 51 at the location of the rotating knife 33. The cam disc 35 can either be a single part with the cam groove 47 at the location of the rotating knife 33,34, or it can be a combination of several cam discs 35 that rotate together around the cam disc axis 56 and that assembled in such a way that the cam groove 47 is at the location of the rotating knife 33,34. It will be clear that a cam groove 47 and a corresponding opening 48 are in a plane perpendicular to the knife rotation axis 45, the rotating knife 33 is in that same plane.

The push bars 21 follow a straight path 53, this path is intersects the cam discs 35. In order to make this intersection possible, the cam discs 35 have cavities 54 that are shaped such that the push bars 21 can pass and the teeth between the cavities 54 support the products P during cutting. For this, the second distance b is considerably larger than the third distance c. The push bars 21 interact with the cam discs 35 and cause them to rotate around the cam disc axis 56.

In another embodiment of the cutting device 3 cams activate parts on the push bars 21 to move the product P upwards against the rotating knife 33, 34. In a further embodiment cams located under the rotating knife 33, 34 in the plane of the table 30 resiliently push against the product upwards.

After the first rotating knife 33 has cut off the end of the product P, the push bar 21 pushes the product P and the cut off end over the cylindrical surface 57 of the cam disc 35 and the end falls through an opening in the table 30 into a first waste duct 36 and is removed. The push bar 21 pushes the remaining part of the product P in the transport direction 39 over a second positioning belt 22. The second positioning belt 22 pushes the product P in transverse direction until it is with its other end against a stop shield 26. The product P is now in the position to be cut by second knives 34, that are rotated by a second knife drive 25 and that cooperate with a second set of cam discs 35 in a similar way as described before. One of the second knives 34 cuts of the second end of the product P; this second end is discharged through an opening in the table 30 into a second waste duct 37. The other second knives 34 have cut the product P in parts 58 that the push bar 21 transports to the edge of the table 30 and the product parts 58 fall downwards in a product discharge 38 and are stored there for further use. A hood 59 protects the chain 29 and the chain wheel 32 from the falling parts 58.

The described embodiment of the invention is for cutting carrots. It is clear to the skilled man that the same or a similar design can also be used for cutting other products, such as cucumbers, parsnips and other vegetables or other products of a long shape.

The described product separator 1 and feeder belts 2 can be used in other devices that handle long and irregular shaped agricultural products P as separate products. The handling can be cutting, peeling or other to prepare the product for the user. The use of the push bars 21 can be replaced by other means that ease the separate handling of the products P and may consist of a tray, a dish or a bin and the location where the product P is held can be generalized as a slot.

## Claims

1. Feeding device for throwing long and possibly irregular shaped agricultural products (P) such as carrots in adjacent slots (63) moving in a transport direction (39) that is perpendicular to the length of the agricultural product, wherein the feeding device comprises a ring (8) rotating at a ring speed that can transport the products in a circular aligned path **characterized in that** the feeding device comprises a first set of feeder belts (11) located adjacent to or adjacent to and above the rotating ring and the first set of feeder belts can grip the product from the rotating ring while moving the product at a first speed and a second set of feeder belts (15) can grip the product and pull it from between the first set of feeder belts and throw the product at a second speed in the slot, whereby the sets of feeder belts (11,15) are aligned perpendicular to the transport direction and wherein the first speed is higher than the ring speed and the second speed is higher than the first speed and wherein further sets of feeder belts between the first and second set of feeder belts might further increase the speed of the product.

2. Feeding device in accordance with claim 1 wherein each set of feeder belts (11,15) comprises two belts that move at the same speed and that form inclined sides of a groove.

3. Feeding device in accordance with claim 1 or 2 comprising a rotating cone (9) with an obtuse top angle whereby the rotating ring rotates around the rotating cone and is locally (A) level with the rotating cone and at all other locations higher than the outer circumference of the rotating cone.

4. Feeding device in accordance with one of the previous claims wherein the feeder belts comprise a first sensor (27) for determining the passage of a product, the feeding device further comprising a second sensor for determining the positions of the slots, a duct (17) with a positioning drive (28) for guiding the separated product during throwing, and a control system (4) with an algorithm for based on first sensor information and second sensor information controlling the setting of the positioning drive.

5. Feeding device in accordance with one of the previous claims wherein before a slot approaches the second set of feeder belts an endless chain positions separation shields on both longitudinal sides of the slot so that they move with the slots and after leaving the second set of feeder belts the endless chain moves the separation shield upwards, and wherein preferably the height of the separation shield is above the height of the second set of feeder belts.

6. Feeding device in accordance with one of the previous claims wherein the slots are formed by push bars moved by a push bar drive sliding over a table (30), the push bars (21) pass in a straight and/or uninterrupted path (53) under a rotating knife (33, 34) with a first rotation axis perpendicular to the transport direction and wherein cams (35) partly extending above the table (30) together with supports (31) on the push bar on both sides of the rotating knife push the product (P) towards and/or against the rotating knife.

7. Feeding device in accordance with claim 6 wherein the cams comprise rotatable cam discs (35) with a cylindrical outer circumference having cavities (54) for accommodating successive push bars (21) moving along the straight and/or uninterrupted path (53).

8. Feeding device in accordance with claim 6 or 7 wherein the push bars (21) extend between two chains (29) coupled to the drive (23) and preferably guide notches (44) guide the push bar in transverse direction.

9. Feeding device in accordance with claim 8 wherein the rotatable cam discs (35) at both sides of a rotating knife (33, 34) form a single part with a groove (47) at the location of the knife.

10. Feeding device in accordance with one of the claims 6 - 9 wherein a first transport belt (19) on the table (30) in front of a first rotating knife (33) moves the product (P) perpendicular to the transport direction (39) against a first rim (18) at a side of the table.

11. Feeding device in accordance with claim 10 wherein a second transport belt (22) in front of a second rotating knife (34) moves the product (P) perpendicular to the transport direction (39) against a second rim (26) at a side of the table (30) that is opposite the first rim (18).

12. Feeding device in accordance with claim 11 wherein the distance between the first rotating knife (33) and the first rim (18) is equal to the distance between the second rotating knife (34) and the second rim (26).

13. Feeding device in accordance with claim 10, 11 or 12 wherein adjacent to the first rotating knife (33) or the second rotating knife (34) further rotating knives are mounted whereby the further rotating knives rotate around the rotation axis (55) of the first or second rotating knife.

## Patentansprüche

1. Zuführvorrichtung zum Werfen langer und möglicherweise unregelmäßig geformter landwirtschaftlicher Produkte (P), wie beispielsweise Karotten, in benachbarte Schlitze (63), welche sich in einer Transportrichtung (39) bewegen, die senkrecht ist zu der Länge des landwirtschaftlichen Produktes, wobei die Zuführvorrichtung einen Ring (8) aufweist, der mit einer Ringgeschwindigkeit rotiert und der die Produkte in einem kreisförmig ausgerichteten Pfad transportieren kann, **dadurch gekennzeichnet, dass** die Zuführvorrichtung einen ersten Satz von Zuführbändern (11) aufweist, der benachbart zu oder benachbart zu und über dem rotierenden Ring angeordnet ist, wobei der erste Satz von Zuführbändern das Produkt von dem rotierenden Ring greifen und das Produkt mit einer ersten Geschwindigkeit bewegen kann, und ein zweiter Satz von Zuführbändern (15) das Produkt greifen und es zwischen dem ersten Satz von Zuführbändern hervorziehen kann und das Produkt mit einer zweiten Geschwindigkeit in den Schlitz werfen kann, wobei die Sätze von Zuführbändern (11, 15) senkrecht zu der Transportrichtung ausgerichtet sind und wobei die erste Geschwindigkeit höher ist als die Ringgeschwindigkeit und die zweite Geschwindigkeit höher ist als die erste Geschwindigkeit und wobei weitere Sätze von Zuführbändern zwischen dem ersten und dem zweiten Satz von Zuführbändern die Geschwindigkeit des Produkts weiter erhöhen können.

2. Zuführvorrichtung gemäß Anspruch 1, wobei jeder Satz von Zuführbändern (11, 15) zwei Bänder aufweist, die sich mit der gleichen Geschwindigkeit bewegen und die geneigten Seiten einer Rinne bilden.

3. Zuführvorrichtung gemäß Anspruch 1 oder 2, aufweisend einen rotierenden Kegel (9) mit einem stumpfen Spitzwinkel, wobei der rotierende Ring um den rotierenden Kegel rotiert und lokal (A) plan mit dem rotierenden Kegel ist und an allen anderen Stellen höher ist als der äußere Umfang des rotierenden Kegels.

4. Zuführvorrichtung gemäß einem der vorangegangenen Ansprüche, wobei die Zuführbänder einen ersten Sensor (27) zum Bestimmen des Durchgangs eines Produkts aufweisen, und die Zuführvorrichtung ferner einen zweiten Sensor zum Bestimmen der Positionen der Schlitze aufweist, einen Führung (17) mit einem Positionierungsantrieb (28) zum Führen des separierten Produkts während des Werfens, und ein Steuersystem (4) mit einem Algorithmus zum Steuern der Einstellung des Positionierungsantriebs basierend auf Informationen des ersten Sensors und Informationen des zweiten Sensors.

5. Zuführvorrichtung gemäß einem der vorangegangenen Ansprüche, wobei, bevor sich ein Schlitz dem zweiten Satz von Zuführbändern nähert, eine endlose Kette Trennschilde an beiden Längsseiten des Schlitzes positioniert, sodass diese sich mit den Schlitzen bewegen und nach Verlassen des zweiten Satzes von Zuführbändern die endlose Kette die Trennschilde nach oben bewegt, und wobei vorzugsweise die Höhe der Trennschilde über der Höhe des zweiten Satzes von Zuführbändern liegt.

6. Zuführvorrichtung gemäß einem der vorangegangenen Ansprüche, wobei die Schlitze durch Schubstangen gebildet sind, die durch einen Schubstangenantrieb bewegt werden, welcher über einen Tisch (30) gleitet und wobei die Schubstangen in einem geraden und/oder kontinuierlichen Pfad (53) unter einem rotierenden Messer (33, 34) mit einer ersten Rotationsachse senkrecht zu der Transportrichtung verlaufen, und wobei Nocken (35), die sich teilweise über dem Tisch (30) erstrecken, gemeinsam mit Stützen (31) an der Schubstange auf beiden Seiten des rotierenden Messers das Produkt (P) in Richtung und/oder gegen das rotierende Messer drücken.

7. Zuführvorrichtung gemäß Anspruch 6, wobei die Nocken drehbare Nockenscheiben (35) aufweisen mit einem zylindrischen äußeren Umfang, welcher Hohlräume (54) aufweist zum Aufnehmen aufeinanderfolgender Schubstangen (21), die sich entlang des geraden und/oder kontinuierlichen Pfads (53) bewegen.

8. Zuführvorrichtung gemäß Anspruch 6 oder 7, wobei die Schubstangen (21) sich zwischen zwei Ketten (29) erstrecken, die mit dem Antrieb (23) verbunden sind, und wobei vorzugsweise Führungskerben (44) die Schubstange in Querrichtung führen.

9. Zuführvorrichtung gemäß Anspruch 8, wobei die drehbaren Nockenscheiben (35) auf beiden Seiten eines rotierenden Messers (33,34) mit einer Rille (47) an der Position des Messers ein einzelnes Teil bilden.

10. Zuführvorrichtung gemäß einem der Ansprüche 6 bis 9, wobei ein erstes Transportband (19) auf dem Tisch (30) vor einem ersten rotierenden Messer (33) das Produkt (P) senkrecht zu der Transportrichtung (39) gegen eine erste Kante (18) an einer Seite des Tisches bewegt.

11. Zuführvorrichtung gemäß Anspruch 10, wobei ein zweites Transportband (22) vor einem zweiten rotierenden Messer (34) das Produkt (P) senkrecht zu der Transportrichtung (39) gegen eine zweite Kante (26) an einer Seite des Tisches bewegt, die der ersten Kante (18) gegenüberliegt.

12. Zuführvorrichtung gemäß Anspruch 11, wobei der Abstand zwischen dem ersten rotierenden Messer (33) und der ersten Kante (18) gleich dem Abstand zwischen dem zweiten rotierenden Messer (34) und der zweiten Kante (26) ist.

13. Zuführvorrichtung gemäß Anspruch 10, 11 oder 12, wobei benachbart zu dem ersten rotierenden Messer (33) oder dem zweiten rotierenden Messer (34) weitere rotierende Messer angebracht sind, wobei die weiteren rotierenden Messer um die Rotationsachse (55) des ersten oder des zweiten rotierenden Messers rotieren.

## Revendications

1. Dispositif d'alimentation pour jeter des produits agricoles (P) de forme longue et éventuellement irrégulière tels que des carottes dans des fentes adjacentes (63) se déplaçant dans une direction de transport (39) qui est perpendiculaire à la longueur du produit agricole, dans lequel le dispositif d'alimentation comprend un anneau (8) tournant à une vitesse d'anneau qui peut transporter les produits dans un trajet linéaire circulaire
**caractérisé en ce que** le dispositif d'alimentation comprend un premier ensemble de courroies d'alimentation (11) situé de manière adjacente à l'anneau tournant ou de manière adjacente et au-dessus de l'anneau tournant et le premier ensemble de courroies d'alimentation peut saisir le produit de l'anneau tournant tout en déplaçant le produit à une première vitesse et un deuxième ensemble de courroies d'alimentation (15) peut saisir le produit et le retirer de l'espace entre le premier ensemble de courroies d'alimentation et jeter le produit à une deuxième vitesse dans la fente, moyennant quoi les ensembles de courroies d'alimentation (11, 15) sont alignés perpendiculairement à la direction de transport et où la première vitesse est supérieure à la vitesse d'anneau et la deuxième vitesse est supérieure à la première vitesse et où d'autres ensembles de courroies d'alimentation entre les premier et deuxième ensemble de courroies d'alimentation pourraient accroître davantage la vitesse du produit.

2. Dispositif d'alimentation selon la revendication 1, dans lequel chaque ensemble de courroies d'alimentation (11, 15) comprend deux courroies qui se déplacent à la même vitesse et qui forment des côtés inclinés d'une rainure.

3. Dispositif d'alimentation selon la revendication 1 ou 2 comprenant un cône tournant (9) ayant un angle obtus au sommet par lequel l'anneau tournant tourne autour du cône tournant et est localement (A) au même niveau que le cône tournant et à tous les autres emplacements plus élevés que la circonférence extérieure du cône tournant.

4. Dispositif d'alimentation selon l'une des revendications précédentes, dans lequel les courroies d'alimentation comprennent un premier capteur (27) pour déterminer le passage d'un produit, le dispositif d'alimentation comprenant en outre un deuxième capteur pour déterminer les positions des fentes, un conduit (17) ayant un élément d'entraînement de positionnement (28) pour guider le produit séparé au cours du jet, et un système de commande (4) ayant un algorithme pour commander le réglage de l'élément d'entraînement de positionnement sur la base des informations de premier capteur et des informations de deuxième capteur.

5. Dispositif d'alimentation selon l'une des revendications précédentes, dans lequel avant qu'une fente ne se rapproche du deuxième ensemble de courroies d'alimentation, une chaîne sans fin positionne des boucliers de séparation sur les deux côtés longitudinaux de la fente de sorte qu'ils se déplacent avec les fentes et après avoir quitté le deuxième ensemble de courroies d'alimentation la chaîne sans fin déplace le bouclier de séparation vers le haut, et où la hauteur du bouclier de séparation est de préférence supérieure à la hauteur du deuxième ensemble de courroies d'alimentation.

6. Dispositif d'alimentation selon l'une des revendications précédentes, dans lequel les fentes sont formées par des barres-poussoirs déplacées par un élément d'entraînement de barres-poussoirs coulissant sur une table (30), les barres-poussoirs (21) passent dans un trajet (53) droit et/ou sans interruption sous un couteau tournant (33, 34) avec un premier axe de rotation perpendiculaire à la direction de transport et où des cames (35) s'étendant partiellement au-dessus de la table (30) conjointement avec des supports (31) sur la barre-poussoir sur les deux côtés du couteau tournant poussent le produit (P) vers et/ou contre le couteau tournant.

7. Dispositif d'alimentation selon la revendication 6, dans lequel les cames comprennent des disques à cames rotatifs (35) avec une circonférence extérieure cylindrique ayant des cavités (54) pour recevoir des barres-poussoirs successives (21) se déplaçant le long du trajet (53) droit et/ou sans interruption.

8. Dispositif d'alimentation selon la revendication 6 ou 7, dans lequel les barres-poussoirs (21) s'étendent entre deux chaînes (29) couplées à l'élément d'entraînement (23) et de préférence des encoches de guidage (44) guident la barre-poussoir dans la direction transversale.

9. Dispositif d'alimentation selon la revendication 8, dans lequel les disques à cames rotatifs (35) au niveau des deux côtés d'un couteau tournant (33, 34) forment une seule pièce ayant une rainure (47) à l'emplacement du couteau.

10. Dispositif d'alimentation selon l'une des revendications 6 à 9, dans lequel une première courroie de transport (19) sur la table (30) en face d'un premier couteau rotatif (33) déplace le produit (P) perpendiculairement à la direction de transport (39) contre un premier rebord (18) à un côté de la table.

11. Dispositif d'alimentation selon la revendication 10, dans lequel une deuxième courroie de transport (22) en face d'un deuxième couteau rotatif (34) déplace le produit (P) perpendiculairement à la direction de transport (39) contre un deuxième rebord (26) à un côté de la table (30) qui est opposé au premier rebord (18).

12. Dispositif d'alimentation selon la revendication 11, dans lequel la distance entre le premier couteau rotatif (33) et le premier rebord (18) est égale à la distance entre le deuxième couteau rotatif (34) et le deuxième rebord (26).

13. Dispositif d'alimentation selon la revendication 10, 11 ou 12, dans lequel d'autres couteaux rotatifs adjacents au premier couteau rotatif (33) ou au deuxième couteau rotatif (34) sont montés moyennant quoi les autres couteaux rotatifs tournent autour de l'axe de rotation (55) du premier ou du deuxième couteau rotatif.
